**Europäisches Patentamt**

**European Patent Office**

**Office européen des brevets**

(11) Veröffentlichungsnummer: **0 100 456**
**A1**

(12) **EUROPÄISCHE PATENTANMELDUNG**

(21) Anmeldenummer: **83106639.4**

(22) Anmeldetag: **07.07.83**

(51) Int. Cl.³: **C 08 L 67/02**
**C 08 L 69/00**

(30) Priorität: **20.07.82 DE 3227028**

(43) Veröffentlichungstag der Anmeldung:
**15.02.84 Patentblatt 84/7**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Weyer, Klaus, Dr.**
**Bayer Antwerpen N.V. Kanaaldok B1 Kruischans**
**B-3040 Antwerpen(BE)**

(72) Erfinder: **Bottenbruch, Ludwig, Dr.**
**Woehlerstrasse 5**
**D-4150 Krefeld(DE)**

(72) Erfinder: **Neuray, Dieter, Dr.**
**Mobay Chemical Corporation**
**New Martinsville West Virginia 26 155(US)**

(72) Erfinder: **Stix, Wolfgang, Dr.**
**Doerperhofstrasse 15**
**D-4150 Krefeld(DE)**

(54) **Thermoplastische Formmassen aus Polyalkylenterephthalat, Polycarbonat und Ethylen/Vinylacetat-Copolymerisat.**

(57) Durch Zusatz von Ethylen/Vinylacetat-Copolymerisat zu Polyalkylenterephthalat/Polycarbonat-Formmassen lassen sich Formkörper herstellen, die neben einer hohen Schlagzähigkeit eine gute Widerstansfähigkeit gegen Witterungseinflüsse und methanolhaltigen Kraftstoff besitzen.

EP 0 100 456 A1

0100456

BAYER AKTIENGESELLSCHAFT     5090 Leverkusen, Bayerwerk
Zentralbereich
Patente, Marken und Lizenzen   Pv-klu/c


Thermoplastische Formmassen aus Polyalkylenterephthalat,
Polycarbonat und Ethylen/Vinylacetat-Copolymerisat
_____

Die Erfindung betrifft thermoplastische Formmassen aus
Polyalkylenterephthalat, aromatischem Polycarbonat und
Ethylen/Vinylacetat-Copolymerisat mit einem Gehalt von
5 - 70 Gew.-% copolymerisierten Vinylacetats.

Formmassen aus Polyalkylenterephthalat, aromatischem Polycarbonat und Copolymerisaten, insbesondere Pfropfpolymerisaten, sind bekannt: DE-PS 15 69 448 (=GB 10 07 724),
DE-AS 20 37 419 (= US 36 55 824), DE-PS 23 43 609
(= US 38 64 428), DE-OS 27 26 256 (=US 40 96 202),
DE-OS 26 59 338, WO 80/00972 (= US 42 57 937) und europäische Patentanmeldung 25 920 (= US 42 64 487). Sie
sollen sich vor allem durch gute Verarbeitbarkeit, gute
Verträglichkeit mit anderen Zusätzen und hohe Schlagzähigkeit auszeichnen.

Obwohl die genannten Formmassen viele positive Eigenschaften besitzen, erfüllen sie einige spezielle

Le A 21 784 - Ausland

0100456
- 2 -

Anforderungen nicht. So ist beispielsweise die Stabilität von Formmassen, die Pfropfpolymerisate auf der Basis eines Polydienkautschuks enthalten, gegen Witterungseinflüsse nicht ausreichend. Solche Formmassen neigen bei Außenbewitterung zur Versprödung und Vergilbung. Sie sind deshalb für Anwendungen im Außenbereich ungeeignet.

Formmassen, die ein Pfropfpolymerisat auf der Basis eines Polyacrylats enthalten, haben diese Nachteile zwar nicht, zeigen aber eine deutlich sichtbare Vergrauung der Oberfläche schon bei kurzzeitigem Kontakt mit - insbesondere methanolhaltigem - Kraftstoff. Diese Vergrauung ist bei pigmentierten Formmassen wegen der damit verbundenen Farbverschiebung besonders nachteilig.

Derartige Nachteile verhindern den Einsatz von aus diesen Formmassen hergestellten Formteilen z.B. im Außenbereich von Kraftfahrzeugen, wo eine große Belastung durch Witterungseinflüsse auftritt und der Kontakt mit Kraftstoffen nicht ausgeschlossen werden kann.

Aufgabe der Erfindung war es daher, Formmassen aus Polyalkylenterephthalat und aromatischem Polycarbonat durch eine dritte Harzkomponente so zu modifizieren, daß sie eine hohe Schlagzähigkeit aufweisen und sowohl Witterungseinflüssen widerstehen als auch keine nachteiligen Veränderungen der Oberfläche beim Kontakt mit Kraftstoffen erfahren.

Überraschenderweise wurde gefunden, daß sich für diesen Zweck ein Zusatz von Ethylen/Vinylacetat-Copolymerisat eignet.

Le A 21 784

Gegenstand der Erfindung sind thermoplastische Formmassen aus

A.    1-99 Gewichtsteilen Polyalkylenterephthalat und
B.    1-99 Gewichtsteilen aromatischem Polycarbonat,
dadurch gekennzeichnet, daß sie zusätzlich
C.    1-30, vorzugsweise mehr als 5 bis 12, Gew.-%,
bezogen auf die Summe der Komponenten A und B, Ethylen/
Vinylacetat-Copolymerisat mit einem Gehalt von 5 - 70,
vorzugsweise 18-40 Gew.-% copolymerisierten Vinylacetats
enthalten.

Polyalkylenterephthalate A im Sinne der Erfindung sind
Reaktionsprodukte aus aromatischen Dicarbonsäuren oder
ihren reaktionsfähigen Derivaten (z.B. Dimethylestern)
und aliphatischen, cycloaliphatischen oder araliphatischen
Diolen und Mischungen dieser Reaktionsprodukte.

Bevorzugte Polyalkylenterephthalate A lassen sich aus
Terephthalsäure (oder ihren reaktionsfähigen Derivaten)
und aliphatischen oder cycloaliphatischen Diolen mit
2 bis 10 C-Atomen nach bekannten Methoden herstellen
(Kunststoff-Handbuch, Bd. VIII, S. 695 ff, Carl Hanser
Verlag, München 1973).

Bevorzugte Polyalkylenterephthalate A enthalten mindestens 80, vorzugsweise mindestens 90 Mol-%, bezogen
auf die Dicarbonsäurekomponente, Terephthalsäurereste
und mindestens 80, vorzugsweise mindestens 90 Mol-%,
bezogen auf die Diolkomponente, Ethylenglykol- und/
oder Butandiol-1,4-reste.

Le A 21 784

Die bevorzugten Polyalkylenterephthalate A können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate A können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan und 2,2-Bis-(4-hydroxypropoxyphenyl)-propan (DE-OS 24 07 674, 24 07 776, 27 15 932).

Die Polyalkylenterephthalate A können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Le A 21 784

Es ist ratsam, nicht mehr als 1 Mol-% des Verzweigungsmittels, bezogen auf die Säurekomponente, zu verwenden.

Besonders bevorzugt sind Polyalkylenterephthalate A,
die allein aus Terephthalsäure oder deren reaktionsfähigen Derivaten (z.B. deren Dialkylestern) und Ethylenglykol und/oder Butandiol-1,4 hergestellt worden
sind, und Mischungen dieser Polyalkylenterephthalate.

Bevorzugte Polyalkylenterephthalate A sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-
1,4)-terephthalate.

Die als Komponente A vorzugsweise verwendeten Polyalkylenterephthalate besitzen im allgemeinen eine Intrinsic-
Viskosität von 0,4 bis 1,5 dl/g, vorzugsweise 0,5 bis 1,3
dl/g, insbesondere 0,6 bis 1,2 dl/g, jeweils gemessen
in Phenol/o-Dichlorbenzol (1:1 Gew.-Teile) bei 25°C.

Unter aromatischen Polycarbonaten B im Sinne dieser
Erfindung werden Homopolycarbonate, Copolycarbonate und
Mischungen dieser Polycarbonate verstanden, denen z.B.
mindestens eines der folgenden Diphenole zugrunde liegt:

Hydrochinon,
Resorcin,
Dihydroxydiphenyle,

Le A 21 784

Bis-(hydroxyphenyl)-alkane,

Bis-(hydroxyphenyl)-cycloalkane,

Bis-(hydroxyphenyl)-sulfide,

Bis-(hydroxyphenyl)-ether,

Bis-(hydroxyphenyl)-ketone,

Bis-(hydroxyphenyl)-sulfoxide,

Bis-(hydroxyphenyl)-sulfone,

$\alpha,\alpha'$-Bis-(hydroxyphenyl)-diisopropylbenzole

sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.

4,4'-Dihydroxydiphenyl, 2,4-Bis-(4-hydroxyphenyl)-2-methylbutan,

$\alpha,\alpha'$-Bis-(4-hydroxyphenyl)-p-diisopropylbenzol, 2,2-Bis-(3-methyl-4-hydroxyphenyl)-propan und

2,2-Bis-(3-chlor-4-hydroxyphenyl)-propan.

Besonders bevorzugte Diphenole sind z.B.

2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan,

Le A 21 784

2,2-Bis-(3,5-dimethyl-4-hydroxyphenyl)-propan und 1,1-Bis-(4-hydroxyphenyl)-cyclohexan.

Die aromatischen Polycarbonate B können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxygruppen, verzweigt sein.

Die aromatischen Polycarbonate B sollen in der Regel mittlere Molekulargewichte $\overline{M}_w$ von 10 000 bis 200 000, vorzugsweise von 20 000 bis 80 000 haben, ermittelt durch Lichtstreuung.

Den hochmolekularen Polycarbonaten mit $\overline{M}_w$ von 10 000 bis 200 000 können auch kleine Anteile niedermolekularer Polycarbonate, z.B. mit einem mittleren Polykondensationsgrad von 2 bis 20, zugemischt sein.

Zur Einstellung des Molekulargewichts $\overline{M}_w$ der Polycarbonate B werden in bekannter Weise Kettenabbrecher, wie beispielsweise Phenol, Halogenphenole oder Alkylphenole, in den berechneten Mengen eingesetzt.

Bevorzugte Polymerisate C besitzen Schmelzindices von nicht fließfähig bis 1000, vorzugsweise von 0,1 bis 20, gemessen bei 190°C und 2,16 kp Belastung nach DIN 53 735. Sie können z.B. nach den in "Encyclopedia of Polymer Science and Technology", Bd. 15, 577-677 (1971) beschriebenen Methoden hergestellt werden.

Le A 21 784

Die erfindungsgemäßen Formmassen eignen sich hervorragend zur Herstellung von Scheinwerferreflektoren, Ventilatorpropellern, Zahnrädern etc.

Sie können bei Massetemperaturen von 260 bis 280°C und bei Formtemperaturen von 60 bis 70°C verspritzt werden.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die Formmassen können bis zu 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z.B. Antimontrioxid.

Le A 21 784

## Beispiel 1

40 Teile Polybutylenterephthalat mit einer Intrinsic-Viskosität von 1,19 dl/g (gemessen in Phenol/o-Dichlorbenzol (Gewichtsverhältnis 1:1) bei 25°C im Ubbelohde-Viskosimeter), 52 Teile Bisphenol-A-Polycarbonat mit einer relativen Viskosität von 1,29 (gemessen an einer Lösung in Dichlormethan einer Konzentration von 0,5 g/100 ml Dichlormethan bei 25°C), 7 Teile eines Ethylen/Vinylacetat (95 %:5%)-Copolymerisats und 1 Teil schwarzes Pigment wurden bei 270°C gemischt und granuliert.

Das Granulat wurde in einer Spritzgußmaschine bei 270°C Massetemperatur und 60°C Formtemperatur zu Formkörpern entsprechend DIN 53 453 = ISO/R 179 (Normkleinstäbe und Flachstäbe) verarbeitet.

Die Normkleinstäbe wurden in Anlehnung an den DIN-Entwurf 53 449, Teil 3, so über eine Metallschablone gespannt, daß sie eine Randfaserdehnung von 0,6 % hatten. Jeweils 2 Proben wurden jeweils 5 Minuten in zwei unterschiedliche Lösungsmittel, die als Kraftstoffsimulanz dienten, getaucht:

Lösungsmittel a bestand aus 50 % Isooctan und 50 % Toluol,
Lösungsmittel b bestand aus 52,5 % Isooctan, 42,5 % Toluol und 15 % Methanol.

An diesen Proben wurde die Rißbildung beurteilt.

Le A 21 784

Zur Prüfung auf die Neigung zum Vergrauen wurden jeweils zwei Normkleinstäbe ohne Spannungsbelastung 1 Minute in die Lösungsmittel getaucht und anschließend (an den trockenen Proben) die Vergrauung beurteilt.

Ergebnis:

Das Produkt zeigte nach Tauchen in den beiden Lösungsmitteln keinerlei Vergrauung. In der methanolhaltigen Lösung wurde keinerlei Rißbildung beobachtet, in der methanolfreien Lösung entstanden einige wenige, kaum sichtbare Haarrisse.

Das Produkt hatte eine Kerbschlagzähigkeit, gemessen nach ISO/R 179, von 11 kJ/m$^2$ bei -40°C und eine Vicat-Erweichungstemperatur (VST, Methode B), gemessen nach ISO 306 (DIN 53 460), von 120°C.

Beispiel 2

Beispiel 1 wurde mit einem Ethylen/Vinylacetat (55 % : 45 %)-Copolymerisat wiederholt.

Ergebnis:

Es wurde weder eine Vergrauung noch eine sichtbare Rißbildung festgestellt.

$a_k$ (-40°C) = 8 kJ/m$^2$      Vicat B: 117°C

Le A 21 784

**Beispiel 3** (Vergleich)

40 Teile Polybutylenterephthalat und 60 Teile Polycarbonat wurden, wie im Beispiel 1 beschrieben, gemischt, zu Formkörpern verarbeitet und in Kraftstoffsimulanz getestet.

**Ergebnis:**

In beiden Medien traten Risse auf. Die Risse waren im methanolfreien Medium stärker als im methanolhaltigen ausgeprägt. Die Vergrauungsneigung kannte bei diesen unpigmentierten Proben nicht beurteilt werden.

Die Kerbschlagzähigkeit betrug bei Raumtemperatur 5 kJ/m$^2$, die Vicat-Erweichungstemperatur 105°C.

0100456

- 12 -

Patentansprüche

1. Thermoplastische Formmassen aus

A. 1-99 Gewichtsteilen Polyalkylenterephthalat und

B. 1-99 Gewichtsteilen aromatischem Polycarbonat, dadurch gekennzeichnet, daß sie zusätzlich

C. 1-30 Gew.-%, bezogen auf die Summe der Komponenten A und B, Ethylen/Vinylacetat-Copolymerisat mit einem Gehalt von 5-70 Gew.-% copolymerisierten Vinylacetats enthalten.

2. Formmassen nach Anspruch 1, dadurch gekennzeichnet, daß sie über 5 bis 12 Gew.-%, bezogen auf die Summe der Komponenten A und B, Komponente C enthalten.

3. Formmassen nach Ansprüchen 1 und 2, dadurch gekennzeichnet, daß das Copolymerisat C 18-40 Gew.-% Reste copolymerisierten Vinylacetats enthält.

Le A 21 784

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CHEMICAL ABSTRACTS, Band 85, Nr. 6, 9. August 1976, Seite 40, Nr. 33961x, Columbus, Ohio, USA & JP - A - 76 39 749 (MITSUBISHI GAS CHEMICAL CO., INC.) 02-04-1976 * Zusammenfassung * | 1-3 | C 08 L 67/02 C 08 L 69/00 |
| X | WO-A-8 002 430 (GENERAL ELECTRIC) * Ansprüche 1-10 * | 1-3 | |
| X | CHEMICAL ABSTRACT, Band 86, Nr. 2, 2. Januar 1977, Seite 17, Nr. 6107n, Columbus, Ohio, USA & JP - A - 76 89 558 (TEIJIN, LTD.) 05-08-1976 * Insgesamt * | 1-3 | |

RECHERCHIERTE SACHGEBIETE (Int. Cl. ³)

C 08 L

Der vorliegende Recherchenbericht wurde für alle Patentansprüche erstellt.

| Recherchenort DEN HAAG | Abschlußdatum der Recherche 12-10-1983 | Prüfer DECOCKER L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03.82